# EUROPÄISCHE PATENTANMELDUNG

(11) **EP 3 372 088 A1**
(43) Veröffentlichungstag der Anmeldung: **12.09.2018**
(21) Anmeldenummer: 17160414.3
(22) Anmeldetag: 10.03.2017
(51) Int. Cl.: A23C 3/03, A23L 2/46, A23L 3/02

(54) **PASTEURISIERUNGSVORRICHTUNG**

(71) Anmelder: Red Bull GmbH, 5330 Fuschl am See (AT)
(72) Erfinder: CONCIN, Roland, 5330 Fuschl am See (AT); EDER, Harald, 5301 Eugendorf (AT); VIECHTBAUER, Volker, 5330 Fuschl am See (AT)
(74) Vertreter: Burger, Hannes

(57) **Zusammenfassung**

Die Erfindung betrifft eine Pasteurisierungsvorrichtung (1) zur Behandlung von in verschlossenen Behältnissen (2) abgefüllten Lebensmitteln. Es ist wenigstens eine Behandlungskammer (5, 6, 7, 8, 9, 10) vorgesehen. Teilabschnitte von Innenflächen (22, 23, 24, 29, 30, 39, 45) der Behandlungskammer (5, 6, 7, 8, 9, 10) sind glatt oder berg-artig zu einem Innenraum (26) der Behandlungskammer (5, 6, 7, 8, 9, 10) vorspringend.

## Beschreibung

Die Erfindung betrifft eine Pasteurisierungsvorrichtung zur thermischen Behandlung von in verschlossenen Behältnissen abgefüllten Lebensmitteln.

Pasteurisierungsvorrichtungen, in welchen Lebensmittel einer Temperaturbehandlung unterzogen werden, sind bekannt. Durch die Temperaturbehandlung werden Mikroorganismen in den Lebensmitteln abgetötet, wodurch sich unter anderem eine längere Haltbarkeit für die Lebensmittel erzielen lässt. Eine weit verbreitete Ausführungsform sind sogenannte Tunnelpasteure, in welchen in Behältnissen befindliche Lebensmittel dadurch temperaturbehandelt werden, indem die Behältnisse in einer oder in mehreren, aufeinanderfolgenden Behandlungskammern mit einer temperierten Prozessflüssigkeit beaufschlagt werden.

Aus ökologischen, energietechnischen und ökonomischen Gründen wird die Prozessflüssigkeit in Pasteurisierungsvorrichtungen üblicherweise zumindest teilweise zur Behandlung immer wiederverwendet, das heißt im Kreis um die Behandlungskammer(n) geführt. Hierbei ist ein fortwährendes Einbringen von Verunreinigungen in die Prozessflüssigkeit aus der Umgebung nicht zu vermeiden. Zwar wurden in der Vergangenheit bereits Maßnahmen zur fortwährenden Reinigung der Prozessflüssigkeit vorgeschlagen, jedoch kann bei bestehenden Pasteurisierungsvorrichtungen eine stetige zunehmende Bildung von Ablagerungen im Betrieb der Pasteurisierungsvorrichtungen nicht ausreichend hintangehalten werden. Hierdurch ist in gewissen Abständen eine Reinigung der Innenflächen von Pasteurisierungsvorrichtungen erforderlich, um ein Entfernen von solchen Ablagerungen durchzuführen. Bei bestehenden Pasteurisierungsvorrichtungen ist die Durchführung solcher Reinigungen aufgrund der Bauweise jedoch schwierig und aufwendig, bzw. kann eine Entfernung von Ablagerungen zum Beispiel in schwer zugänglichen Teilbereichen der Behandlungskammer(n) sogar fast unmöglich sein.

Aufgabe der Erfindung war es, eine verbesserte Pasteurisierungsvorrichtung bereitzustellen, bei welcher insbesondere eine Reinigung mit möglichst geringem Aufwand und verbesserter Reinigungseffizienz durchgeführt werden kann.

Dies Aufgabe wird durch eine Pasteurisierungsvorrichtung gemäß dem Wortlaut des Patentanspruches 1 gelöst.

Es wird eine Pasteurisierungsvorrichtung bereitgestellt, welche Pasteurisierungsvorrichtung wenigstens eine Behandlungskammer zur Behandlung von in verschlossenen Behältnissen abgefüllten Lebensmitteln mit einer temperierten Prozessflüssigkeit umfasst. Die wenigstens eine Behandlungskammer weist mindestens eine Zufuhrvorrichtung zur Zuführung temperierter Prozessflüssigkeit und wenigstens einen Ablauf zum Abführen der Prozessflüssigkeit auf. Die wenigstens eine Behandlungskammer weist zudem zumindest einen Bodenabschnitt, eine umlaufende Seitenwand und einen Übergangsabschnitt zwischen dem Bodenabschnitt und der Seitenwand auf. Der Bodenabschnitt, die Seitenwand und der Übergangsabschnitt weisen jeweils eine zum Inneren der Behandlungskammer weisende Innenfläche auf.
Außerdem weist die Seitenwand zumindest zwei Öffnungen zur Zuführung und Abführung der Behältnisse auf.

Wesentlich ist hierbei, dass alle Teilabschnitte der Innenfläche des Bodenabschnitts, alle Teilabschnitte der Innenfläche des Übergangsabschnittes und alle Teilabschnitte der Innenfläche der Seitenwand glatt ausgestaltet sind, wobei Bereiche von Randkurven zwischen aneinandergrenzenden Teilabschnitten der Innenflächen und zwischen Teilabschnitten von aneinandergrenzenden Innenflächen berggrat-artig zum Innenraum hin vorspringend sind, oder dass alle Teilabschnitte der Innenfläche des Bodenabschnitts, alle Teilabschnitte der Innenfläche des Übergangsabschnittes und alle Teilabschnitte der Innenfläche der Seitenwand glatt ausgestaltet sind, wobei alle Übergänge zwischen Teilabschnitten der Innenflächen und alle Übergänge zwischen Teilabschnitten von aneinandergrenzenden Innenflächen glatt ausgestaltet sind.

Durch diese baulichen Merkmale kann eine Pasteurisierungsvorrichtung bereitgestellt werden, welche ohne großen Aufwand gereinigt werden kann, da alle Innenflächen der wenigstens einen Behandlungskammer verhältnismäßig leicht zugänglich sind. Des Weiteren kann durch diese Ausgestaltung der wenigstens einen Behandlungskammer auch schon grundsätzlich die Bildung von Ablagerungen an den Innenflächen der wenigstens einen Behandlungskammer hintangehalten werden. Bezüglich eines Innenraums der wenigstens einen Behandlungskammer nach außen zugespitzte, bzw. bezüglich des Innenraums tal-artig verlaufende Übergänge, wie zum Beispiel nach außen gerichtete Ecken oder Kanten, in deren Vertiefungen sich in der Regel vermehrt Ablagerungen niederschlagen, sind in der oder den Behandlungskammer(n) nicht vorhanden. Dies ist weiters für die Reinigung von Vorteil, da solche bezüglich des Innenraums der wenigstens Behandlungskammer zugespitzte Übergänge auch für Reinigungsmaßnahmen besonders schwer zugänglich wären. Durch die verbessere Ausgestaltung der wenigstens einen Behandlungskammer kann insbesondere die Reinigungseffizienz für die mit der Prozessflüssigkeit im Betrieb in Kontakt stehenden Innenflächen deutlich verbessert werden.

Bei einer Weiterbildung der Pasteurisierungsvorrichtung kann vorgesehen sein, dass die wenigstens eine Behandlungskammer einen oberen Abdeckungsabschnitt und einen weiteren Übergangsabschnitt zwischen dem oberen Abdeckungsabschnitt und der Seitenwand aufweist, und dass alle Teilabschnitte einer Innenfläche des oberen Abdeckungsabschnitts und alle Teilabschnitte einer Innenfläche des weiteren Übergangsabschnittes glatt ausgestaltet sind, wobei Bereiche von Randkurven zwischen aneinandergrenzenden Teilabschnitten der Innenflächen und zwischen Teilabschnitten von aneinandergrenzenden Innenflächen berggrat-artig zum Innenraum hin vorspringend sind, oder dass alle Teilabschnitte der Innenfläche des oberen Abdeckungsabschnitts und alle Teilabschnitte der Innenfläche des weiteren Übergangsabschnittes glatt ausgestaltet sind, wobei alle Übergänge zwischen Teilabschnitten der Innenflächen und alle Übergänge zwischen Teilabschnitten von aneinandergrenzenden Innenflächen glatt ausgestaltet sind.

Hierdurch ist auch eine Abdeckung für die wenigstens eine Behandlungskammer bereitgestellt, welche ebenfalls mit hoher Effizienz zu reinigen ist, und eine Bildung von Ablagerungen grundsätzlich hintangehalten ist. Von Vorteil ist bei dieser Ausgestaltungsform außerdem, dass eine verbesserte Abgrenzung des Innenraums der wenigstens einen Behandlungskammer von der Umgebung gegeben ist, was sich unter Anderem hinsichtlich Energieeffizienz vorteilhaft auswirkt.

Bei einer weiteren Weiterbildung der Pasteurisierungsvorrichtung kann vorgesehen sein, dass alle Punkte auf der Innenfläche des Bodenabschnitts einen Krümmungsradius von mindestens 100 mm, bevorzugt mindestens 20 mm aufweisen.

Bei einer weiteren Weiterbildung der Pasteurisierungsvorrichtung kann vorgesehen sein, dass alle Punkte auf der Innenfläche des Übergangsabschnittes einen Krümmungsradius von mindestens 50 mm, bevorzugt mindestens 10 mm aufweisen.

Bei einer weiteren Weiterbildung der Pasteurisierungsvorrichtung kann vorgesehen sein, dass alle Punkte auf der Innenfläche des oberen Abdeckungsabschnitts einen Krümmungsradius von mindestens 100 mm, bevorzugt mindestens 20 mm aufweisen.

Bei einer weiteren Weiterbildung der Pasteurisierungsvorrichtung kann vorgesehen sein, dass alle Punkte auf der Innenfläche des weiteren Übergangsabschnittes einen Krümmungsradius von mindestens 50 mm, bevorzugt mindestens 10 mm aufweisen.

Durch diese Merkmale sind jeweils Mindestkrümmungsradien für die einzelnen Innenflächen definiert, welche insbesondere zu einer verbesserten Reinigungseffizienz für die wenigstens eine Behandlungskammer beitragen.

Bei einer weiteren Weiterbildung der Pasteurisierungsvorrichtung kann vorgesehen sein, dass der Ablauf der wenigstens einen Behandlungskammer einen in den Bodenabschnitt mündenden Übergang aufweist, wobei eine Innenfläche dieses Übergangs, bezogen auf den Innenraum der wenigstens einen Behandlungskammer, vollumfänglich gekrümmt, aber an jeder Stelle glatt ausgestaltet ist.

Hierdurch können auch eine verbesserte Reinigungseffizienz und eine Verringerung der Tendenz zur Bildung von Ablagerungen im Bereich des Ablaufs bereitgestellt werden.

Bei einer weiteren Weiterbildung der Pasteurisierungsvorrichtung kann vorgesehen sein, dass die wenigstens eine Behandlungskammer im oberen Abdeckungsabschnitt zumindest eine runde oder ovale Öffnung für ein Zuführmittel der Zufuhrvorrichtung aufweist, wobei eine Innenseite des Umrandungssegments glatt ist.

Hierdurch kann auch die Reinigungseffizienz für den Bereich der mindestens einen Öffnung für das Zuführmittel verbessert werden.

Schließlich kann auch vorgesehen sein, dass der wenigstens einen Behandlungskammer eine Waschvorrichtung zur zumindest teilautomatisierten Reinigung der jeweiligen Innenflächen zugeordnet ist.

Durch dieses Merkmal kann im Bedarfsfall eine teilautomatisierte Reinigung der Innenflächen der wenigstens einen Behandlungskammer vorgenommen werden.

Zum besseren Verständnis der Erfindung wird diese anhand der nachfolgenden Figur näher erläutert.

Es zeigt in stark vereinfachter, schematischer Darstellung:
- Fig. 1: Eine schematische Darstellung einer mögliche Ausführungsform für eine Pasteurisierungsvorrichtung, in Art eines Tunnelpasteurs;
- Fig. 2: Eine Vertikalschnittansicht einer Behandlungskammer einer Pasteurisierungsvorrichtung;
- Fig. 3: Eine Horizontalschnittansicht einer Behandlungskammer einer Pasteurisierungsvorrichtung;
- Fig. 4: Eine Schnittansicht eines Bereiches einer Behandlungskammer.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

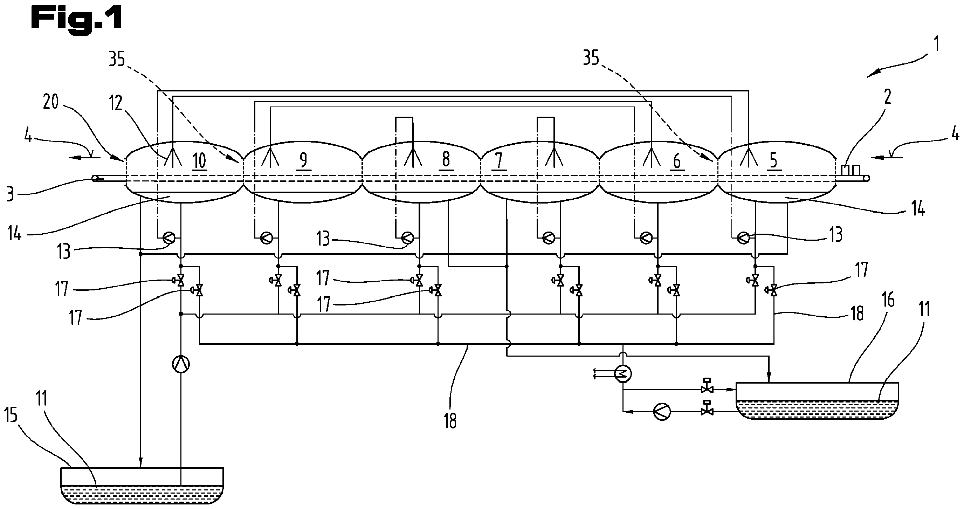

In der Fig. 1 ist ein Ausführungsbeispiel einer Pasteurisierungsvorrichtung 1 zum Pasteurisieren von in verschlossenen Behältnissen 2 abgefüllten Lebensmitteln schematisch dargestellt. Die in der Fig. 1 beispielhaft dargestellte Vorrichtung 1 ist in der Art eines sogenannten Tunnelpasteurs ausgeführt, bei welchem die Behältnisse 2 mittels eines Fördermittels 3, beispielsweise ein Förderband in einer Transportrichtung 4 durch mehrere aufeinanderfolgende Behandlungskammern transportiert werden. Bei dem in der Fig. 1 dargestellten Ausführungsbespiel sind in Transportrichtung 4 zunächst zwei Anwärmkammern 5, 6, dann zwei Pasteurisierungskammern 7, 8 und schließlich zwei Abkühlkammern 9, 10 vorgesehen.

Je nach Bedarf bzw. Einsatzzweck einer Pasteurisierungsvorrichtung können selbstverständlich auch mehr oder weniger Behandlungskammern, als im Ausführungsbeispiel gemäß der Fig. 1 vorhanden sein. Ebenfalls ist möglich, dass weitere Behandlungskammern vorgesehen sind. Zum Beispiel könnte nachfolgend auf die in Transportrichtung 4 am Ende angeordnete Abkühlkammer 10 beispielsweise eine weitere Kammer zur Trocknung der Außenseite der Behältnisse 2 vorgesehen sein. Aus Gründen der Übersichtlichkeit sind in der Fig. 1 solche zusätzlichen Behandlungskammern nicht dargestellt. Jedenfalls ist wenigstens eine Behandlungskammer 7, 8 zum Pasteurisieren der Lebensmittel in den Behältnissen 2 vorgesehen.

Zur Behandlung bzw. Pasteurisierung der Lebensmittel kann vorgesehen sein, die Behältnisse 2 mit einer temperierten Prozessflüssigkeit 11 zu beaufschlagen. In dem Ausführungsbeispiel gemäß der Fig. 1 sind hierzu in jeder Kammer 5, 6, 7, 8, 9, 10 eingangsseitig mindestens eine Zufuhrvorrichtung 12 angeordnet, mittels welcher die Prozessflüssigkeit 11 auf bzw. über die Außenseite der verschlossenen Behältnisse 2 verteilt bzw. beaufschlagt werden kann. Die Zufuhrvorrichtungen 12 können beispielsweise durch Berieselungsvorrichtungen 12 mit einer Mehrzahl an Sprühdüsen gebildet sein, welche in jeder Kammer 5, 6, 7, 8, 9, 10 beispielsweise in einem oberen und/oder seitlichen Bereich angeordnet sein können. In die jeweilige Behandlungskammer 5, 6, 7, 8, 9, 10 kann die Prozessflüssigkeit 11 über die Berieselungsvorrichtungen 12 mit jeweils unterschiedlichem bzw. für jede Kammer 5, 6, 7, 8, 9, 10 eingestelltem Temperaturniveau eingeleitet werden, wie dies nachfolgend noch näher erläutert wird. Die Prozessflüssigkeit 11 kann den Zufuhr- bzw. Berieselungsvorrichtungen 12 der Kammern 5, 6, 7, 8, 9, 10 hierbei jeweils über eine Pumpe, insbesondere Umwälzpumpe 13 zugeführt werden.

Um ein möglichst schonendes Vorwärmen der Lebensmittel in den Behältnissen 2 zu ermöglichen kann zum Beispiel vorgesehen sein, dass die Prozessflüssigkeit 11 der Anwärmkammer 5 mit einer Temperatur von ca. 35 °C, und der anschließenden Anwärmkammer 6 mit einer Temperatur von ca. 55 °C zugeführt wird. Zur Pasteurisierung der Lebensmittel in den Behältnissen 2 kann die Zufuhr der Prozessflüssigkeit 11 in die Pasteurisierungskammern 7, 8 bei einer Temperatur von beispielsweise 85 °C erfolgen, um die Behältnisse 2 bzw. die beinhalteten Lebensmittel auf eine effektive Pasteurisierungstemperatur aufzuheizen und für eine ausreichende Zeitdauer auf dieser Pasteurisierungstemperatur zu halten. Zum gezielten Abkühlen der Behältnisse 2 bzw. der Lebensmittel kann vorgesehen sein, die Prozessflüssigkeit 11 mit einer Temperatur von ca. 50 °C in die erste Abkühlkammer 9, und mit einer Temperatur von etwa 30 °C in die zweite Abkühlkammer 10 einzuleiten. Zum Erhitzen und/oder Abkühlen der Prozessflüssigkeit 11 können in bekannter Art und Weise Heizmittel und Kühlungsmittel vorgesehen sein, welche in der Fig. 1 nicht näher bezeichnet bzw. dargestellt sind.

Nach Durchströmen einer der jeweiligen Kammern 5, 6, 7, 8, 9, 10 kann die Prozessflüssigkeit 11 in einem unteren Sammelbereich 14 der Kammern 5, 6, 7, 8, 9, 10 aufgefangen und zur weiteren Verwendung aus den Kammern 5, 6, 7, 8, 9, 10 abgeführt werden. Hierzu können einerseits die Eingangs- bzw. Ansaugseiten der Umwälzpumpen 13 mit den Sammelbereichen 14 der Kammern 5, 6, 7, 8, 9, 10 leitungsverbunden sein, um zumindest Teilmengen der Prozessflüssigkeit 11 aus den Sammelbereichen 14 unmittelbar wieder einer der Kammern 5, 6, 7, 8, 9, 10 zuzuführen. Wie im Ausführungsbeispiel gemäß der Fig. 1 dargestellt ist, kann es hierbei zweckmäßig sein, wenn die Umwälzpumpe 13, welche eingangsseitig mit dem Sammelbereich 14 der Anwärmkammer 5 leitungsverbunden ist, ausgangsseitig mit der Berieselungsvorrichtung 12 der Abkühlkammer 10 leitungsverbunden ist. Dies kann primär deshalb zweckmäßig sein, da sich die Prozessflüssigkeit 11 in Anwärmkammer 5 durch die Wärmeaufnahme der Behältnisse 2 bzw. Lebensmittel abkühlt, und nach Durchströmen der Anwärmkammer 5 ein zum Abkühlen der Behältnisse 2 in Abkühlkammer 10 geeignetes Temperaturniveau aufweist.

Aus denselben Gründen kann eine Zuführung der Prozessflüssigkeit 11 aus dem Sammelbereich 14 der Abkühlkammer 10 zu der Berieselungsvorrichtung 12 der Anwärmkammer 5 sinnvoll sein, wie dies auch im Ausführungsbeispiel der Pasteurisierungsvorrichtung 1 in der Fig. 1 schematisch veranschaulicht ist. Des Weiteren kann analog auch eine wechselseitige Zuführung der Prozessflüssigkeit 11 von Anwärmkammer 6 in Abkühlkammer 9 und umgekehrt vorgesehen sein.

Wie im Ausführungsbeispiel in der Fig. 1 dargestellt, können die den Pasteurisierungskammern 7, 8 zugeordneten Umwälzpumpen 13 zur zumindest teilweisen Rückförderung der Prozessflüssigkeit 11 aus dem Sammelraum der Kammer 7 respektive Kammer 8 zu den Berieselungsvorrichtungen 12 der entsprechenden Kammer 7 respektive Kammer 8 vorgesehen sein. In anderen Worten ausgedrückt kann vorgesehen sein, dass zumindest eine Teilmenge der Prozessflüssigkeit 11 im Kreis um die Pasteurisierungskammer 7 und um die Pasteurisierungskammer 8 geführt wird.

Des Weiteren kann vorgesehen sein, dass Teilmengen der in den Sammelbereichen 14 anfallenden Prozessflüssigkeit 11 anstatt wieder in eine Behandlungskammer 5, 6, 7, 8, 9, 10 zurückgepumpt zu werden, wenigstens einem Sammelbecken zugeführt werden. Hierzu kann die Pasteurisierungsvorrichtung 1 wenigstens ein Sammelbecken 15, 16 umfassen. Gemäß dem in der Fig. 1 dargestellten Ausführungsbeispiel, kann einerseits ein Sammelbecken 15 angeordnet sein, welches zur Sammlung von Prozessflüssigkeit 11 auf tiefen Temperaturniveau vorgesehen ist. Das Sammelbecken 15 kann insbesondere mit Sammelbereichen 14, in welchen die Prozessflüssigkeit 11 eine verhältnismäßig geringe Temperatur aufweist, leitungsverbunden sein. Im in der Fig. 1 dargestellten Ausführungsbeispiel ist das Sammelbecken 15 daher insbesondere mit den Sammelbereich 14 der Anwärmkammer 5 und dem Sammelbereich 14 der Abkühlkammer 10 leitungsverbunden.

Bei dem Ausführungsbeispiel gemäß Fig. 1 ist außerdem ein Sammelbecken 16 angeordnet, welches zur Sammlung und Zwischenspeicherung von Prozessflüssigkeit mit hohem Temperaturniveau vorgesehen ist. Daher kann es sinnvoll sein, dieses Sammelbecken 16 mit den Sammelbereichen 14 der Pasteurisierungskammern 7, 8 zu verbinden, wie dies auch in der Fig. 1 schematisch veranschaulicht ist.

Mittels der Umwälzpumpen 13 und eingangsseitig der Umwälzpumpen 13 angeordneter Dosiervorrichtungen 17 ist im in der Fig. 1 dargestellten Ausführungsbeispiel den Zufuhr- bzw. Berieselungsvorrichtungen 12 der Kammern 5, 6, 7, 8, 9, 10 Prozessflüssigkeit 11 mit niedrigem Temperaturniveau aus dem Kältetank 15 zudosierbar. Des Weiteren ist den Berieselungsvorrichtungen 12 der Kammern 5, 6, 7, 8, 9, 10 auch mittels weiterer Dosiervorrichtungen 17 Prozessflüssigkeit 11 mit mindestens Pasteurisierungstemperatur oder höherer Temperatur aus einem Vorlauf 18 zudosierbar. Die Dosiervorrichtungen 17 können hierbei beispielsweise durch Durchflussregelventile gebildet sein. Dadurch kann jeder Behandlungskammer 5, 6, 7, 8, 9, 10 Prozessflüssigkeit 11 mit gezielt festlegbarer bzw. einstellbarer Temperatur zugeführt werden.

Selbstverständlich sind hinsichtlich der Förderung der Prozessflüssigkeit 11 durch die Vorrichtung 1 bzw. die jeweiligen Kammern 5, 6, 7, 8, 9, 10 auch andere, alternative Lösungen als die in der Fig. 1 dargestellte grundsätzlich möglich. Zum Beispiel kann je nach Einsatzzweck der Pasteurisierungsvorrichtung 1 ein Zumischen von kalter Prozessflüssigkeit aus dem Sammelbecken 15 zumindest für einige Behandlungskammern erübrigt sein, sodass nicht jede der Umwälzpumpen 13 notwendigerweise eingangsseitig mit dem Sammelbecken 15 leitungsverbunden sein müssen. Ebenso kann vorgesehen sein, dass wenigstens einige der Umwälzpumpen 13 nicht mit dem Prozessflüssigkeit 11 mit mindestens Pasteurisierungstemperatur führenden Vorlauf 18 leitungsverbunden sind.

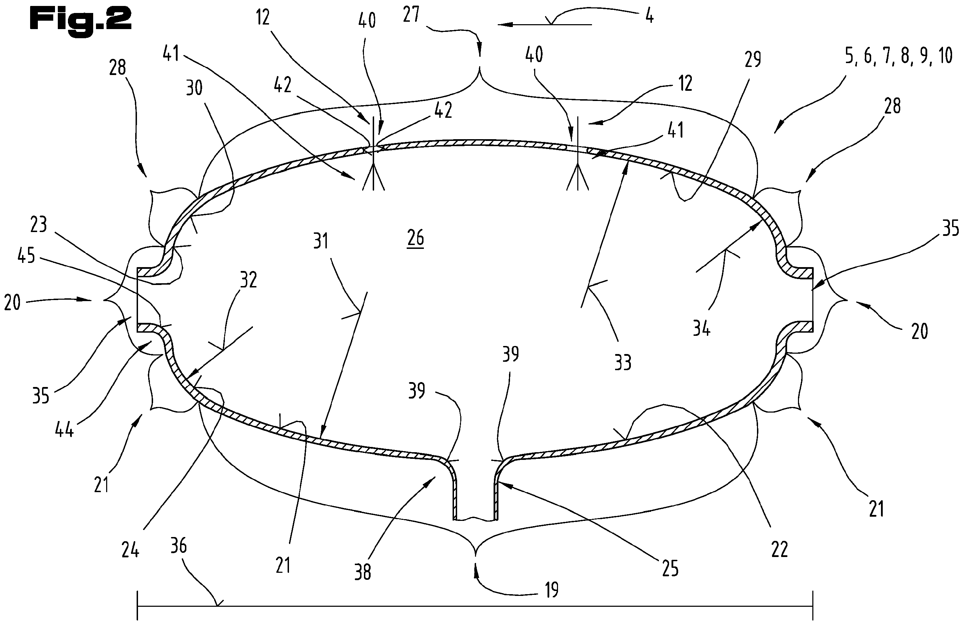

Zur besseren Ersichtlichkeit und zum besseren Verständnis der Erfindung ist exemplarisch eine Behandlungskammer 5, 6, 7, 8, 9, 10 in der Fig. 2 in Vertikalschnittansicht, und im Vergleich zu Fig. 1 vergrößert dargestellt. Der dargestellte Vertikalschnitt ist hierbei entlang einer durch eine horizontale Mitte der beiden Öffnungen 35 der wenigstens einen Behandlungskammer 5, 6, 7, 8, 9, 10, zwischen den Öffnungen 35 verlaufenden, vertikalen Ebene ausgeführt. Die Fig. 2 veranschaulicht auch einen Längsverlauf der wenigstens einen Behandlungskammer 5, 6, 7, 8, 9, 10 in Richtung der Transportrichtung 4 der Behältnisse 2 (siehe auch Fig. 1). Eine Längserstreckung 36 der wenigstens einen Behandlungskammer 5, 6, 7, 8, 9, 10, entspricht hierbei der maximalen Ausdehnung der wenigstens einen Behandlungskammer 5, 6, 7, 8, 9, 10 in Richtung der Transportrichtung 4, bzw. einem Abstand der einander gegenüberliegenden Öffnungen 35. Das zumindest im Betrieb der Pasteurisierungsvorrichtung 1 durch die wenigstens eine Behandlungskammer 5, 6, 7, 8, 9, 10 verlaufende Fördermittel 3 (siehe Fig. 1) wurde aus Gründen der Übersichtlichkeit in der Fig. 2 nicht dargestellt.

Wie aus der Fig. 2 ersichtlich ist, weist die wenigstens eine Behandlungskammer 5, 6, 7, 8, 9, 10 zumindest einen Bodenabschnitt 19, eine Seitenwand 20 und einen Übergangsabschnitt 21 zwischen dem Bodenabschnitt 19 und der Seitenwand 20 auf. Der Bodenabschnitt 19 weist eine zum Inneren der Behandlungskammer 5, 6, 7, 8, 9, 10 weisende Innenfläche 22 auf, die Seitenwand 20 weist eine zum Inneren der Behandlungskammer 5, 6, 7, 8, 9, 10 weisende Innenfläche 23 auf, und der Übergangsabschnitt 21 weist eine zum Inneren der Behandlungskammer 5, 6, 7, 8, 9, 10 weisende Innenfläche 24 auf.

In der Seitenwand 20 sind zumindest zwei Öffnungen 35 zur Zuführung und Abführung der Behältnisse 2 ausgestaltet. Diese Öffnungen 35 sind auch aus der Fig. 1 ersichtlich. Die Öffnungen 35 befinden sich an einander gegenüberliegenden Endbereichen der wenigstens einen Behandlungskammer 5, 6, 7, 8, 9, 10, das heißt die eine Öffnung 35 befindet sich eingangsseitig und die andere Öffnung 35 befindet sich ausgangsseitig der wenigstens einen Behandlungskammer 5, 6, 7, 8, 9, 10. Durch diese Öffnungen 35 können die Behältnisse 2, beispielsweise mittels des Fördermittels 3 in der Transportrichtung 4 durch die Behandlungskammern 5, 6, 7, 8, 9, 10 hindurchgeführt werden, wie in der Fig. 1 dargestellt. Die Öffnungen 35 können hierbei zum Beispiel mittels eines Plastikvorhanges oder eines anderen Abdichtmittels zumindest teilweise gegenüber anderen Kammern 5, 6, 7, 8, 9, 10 bzw. gegenüber der Umgebung abgedichtet sein. Wie wiederum aus der Fig. 2 deutlich ersichtlich ist, weist die wenigstens eine Behandlungskammer 5, 6, 7, 8, 9, 10 wenigstens einen Ablauf 25 zum Abführen der Prozessflüssigkeit auf. Dieser Ablauf 25 kann zum Beispiel zu einer Umwälzpumpe 13 führen, wie dies in der Fig. 1 dargestellt ist.

Wesentlich ist, dass in der wenigstens einen Behandlungskammer 5, 6, 7, 8, 9, 10 alle Teilabschnitte der Innenfläche 22 des Bodenabschnitts 19, alle Teilabschnitte der Innenfläche 24 des Übergangsabschnittes 21 und alle Teilabschnitte der Innenfläche 23 der Seitenwand 20 glatt ausgestaltet sind, wobei Bereiche von Randkurven zwischen aneinandergrenzenden Teilabschnitten der Innenflächen 22, 23, 24 und zwischen Teilabschnitten von aneinandergrenzenden Innenflächen 22, 23, 24 berggrat-artig zum Innenraum 26 hin vorspringend sind, oder dass alle Teilabschnitte der Innenfläche 22 des Bodenabschnitts 19, alle Teilabschnitte der Innenfläche 24 des Übergangsabschnittes 21 und alle Teilabschnitte der Innenfläche 23 der Seitenwand 20 glatt ausgestaltet sind, wobei alle Übergänge zwischen Teilabschnitten der Innenflächen 22, 23, 24 und alle Übergänge zwischen Teilabschnitten von aneinandergrenzenden Innenflächen 22, 23, 24 glatt ausgestaltet sind.

Des Weiteren kann vorgesehen sein, dass die wenigstens eine Behandlungskammer 5, 6, 7, 8, 9, 10 einen oberen Abdeckungsabschnitt 27 und einen weiteren Übergangsabschnitt 28 zwischen dem oberen Abdeckungsabschnitt 27 und der Seitenwand 20 aufweist. Hierbei kann vorgesehen sein, dass alle Teilabschnitte einer Innenfläche 29 des oberen Abdeckungsabschnitts 27 und alle Teilabschnitte einer Innenfläche 30 des weiteren Übergangsabschnittes 28 glatt ausgestaltet sind, wobei Bereiche von Randkurven zwischen aneinandergrenzenden Teilabschnitten der Innenflächen 23, 29, 30 und zwischen Teilabschnitten von aneinandergrenzenden Innenflächen 23, 29, 30 berggrat-artig zum Innenraum 26 hin vorspringend sind, oder dass alle Teilabschnitte einer Innenfläche 29 des oberen Abdeckungsabschnitts 27 und alle Teilabschnitte einer Innenfläche 30 des weiteren Übergangsabschnittes 28 glatt ausgestaltet sind, wobei alle Übergänge zwischen Teilabschnitten der Innenflächen 23, 29, 30 und alle Übergänge zwischen Teilabschnitten von aneinandergrenzenden Innenflächen 23, 29, 30 glatt ausgestaltet sind.

Insofern bei der Ausgestaltung der Innenflächen 22, 23, 24, 29, 30 bzw. von Teilabschnitten der Innenflächen 22, 23, 24, 29, 30 der wenigstens einen Behandlungskammer 5, 6, 7, 8, 9, 10 davon die Rede ist, dass diese "glatt" sein sollen, so sind damit ebene oder gekrümmte Oberflächen der Behälterwand der Behandlungskammer 5, 6, 7, 8, 9, 10 gemeint. Bekanntlich wird ja in der Mathematik dann von einer glatten Fläche gesprochen, wenn die die Fläche beschreibende Funktion stückweise stetig differenzierbar ist. Dies ist gleichbedeutend damit, dass die Tangentialebenen an die Fläche zu einander benachbarten Punkten auf der Fläche stetig veränderlich sind. Analog dazu sind glatte Raumkurven stetig und stetig differenzierbar. Im Gegensatz dazu hat eine nicht glatte Fläche Punkte oder Kurven, an denen die Ableitung bzw. die Tangentialebene nicht eindeutig ist. Beispiele solcher Punkte oder Kurven einer Fläche sind Ecken oder Kanten.

Andererseits soll bei der Verwendung des Begriffs "glatt" aber von herstellungsbedingten Oberflächenrauigkeiten abgesehen werden. Insofern liegen auch, wenn von gekrümmten Teilabschnitten die Rede ist, die Bereiche der lokalen Krümmungsradien von einzelnen Stellen bzw. von Punkten der Innenflächen Größenordnungen über den Werten der zu erwartenden Rautiefen der für die Behälterwände verwendeten Materialien.

Vorzugsweise weisen alle Punkte auf der Innenfläche 22 des Bodenabschnitts einen Krümmungsradius 31 von mindestens 100 mm, bevorzugt mindestens 20 mm auf. Es weist also an einer Stelle mit der kleinsten Krümmung der Innenfläche 22 des Bodenabschnittes 19 die Innenfläche 22 an dieser Stelle einen Krümmungsradius 31 von mindestens 100 mm, und bevorzugt mindestens 20 mm auf. In anderen Worten ausgedrückt weist ein gedachter, an der Stelle mit der kleinsten Krümmung der Innenfläche 22 des Bodenabschnittes 19 angeschmiegter Krümmungskreis, einen Radius von mindestens 100 mm auf.

Bei einer weiteren, bevorzugten Ausführungsform weisen in analoger Weise alle Punkte auf der Innenfläche 23 des Übergangsabschnittes 20 einen Krümmungsradius 32 von mindestens 50 mm, bevorzugt mindestens 10 mm auf.

Wie weiters in der Fig. 2 veranschaulicht ist, können alle Punkte auf der Innenfläche 29 des oberen Abdeckungsabschnitts 27 einen Krümmungsradius 33 von mindestens 100 mm, bevorzugt mindestens 20 mm aufweisen. Außerdem kann vorgesehen sein, dass alle Punkte auf der Innenfläche 30 des weiteren Übergangsabschnittes 28 einen Krümmungsradius 34 von mindestens 50 mm, bevorzugt mindestens 10 mm aufweisen.

Die schematisch in der Fig. 2 dargestellten Krümmungsradien 31, 32, 33, 34 sind zur Veranschaulichung der Mindestkrümmungen in den jeweiligen Abschnitten 19, 20, 27, 28 dargestellt, und sind diese Krümmungsradien 31, 32, 33, 34 nicht maßstäblich bzw. maßbezogen dargestellt. Es wird diesbezüglich auf die jeweils in der Beschreibung angeführten Werte für die entsprechenden Krümmungsradien 31, 32, 33, 34 verwiesen.

Die Innenflächen 23 der Seitenwände 20 können, in vertikaler Richtung betrachtet, einen weitestgehend ebenen Verlauf aufweisen, wie dies anhand des in der Fig.2 dargestellten Ausführungsbeispiels erkennbar ist. Es ist aber auch möglich, dass die Innenflächen 23 oder zumindest Teilabschnitte der Innenflächen 23 der Seitenwand 20, bezogen auf den Innenraum 26, zumindest abschnittsweise einen geringfügig gekrümmten Verlauf aufweisen.

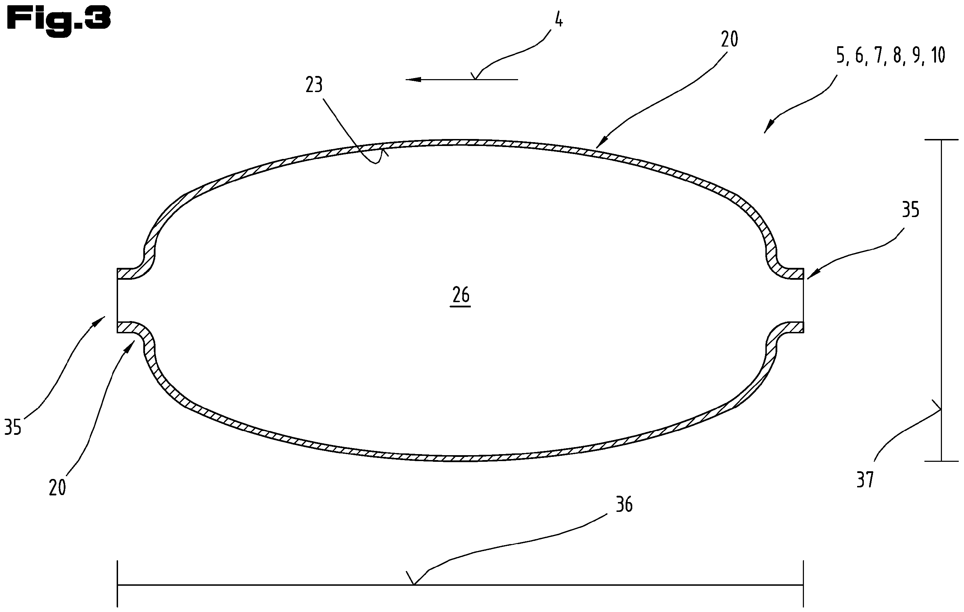

In der Fig. 3 ist eine Horizontalschnittansicht der wenigstens einen Behandlungskammer 5, 6, 7, 8, 9, 10 dargestellt. Der Horizontalschnitt ist hierbei entlang einer vertikalen Mitte der Öffnungen 35, horizontal zwischen den Öffnungen 35 verlaufenden Ebene ausgeführt. Das zumindest im Betrieb der Pasteurisierungsvorrichtung 1 durch die wenigstens eine Behandlungskammer 5, 6, 7, 8, 9, 10 verlaufende Fördermittel 3 (Fig. 1) wurde aus Gründen der Übersichtlichkeit auch in der Fig. 3 nicht dargestellt. Eine Breitenerstreckung 37 der wenigstens einen Behandlungskammer 5, 6, 7, 8, 9, 10, entspricht hierbei der maximalen Ausdehnung der wenigstens einen Behandlungskammer 5, 6, 7, 8, 9, 10 in horizontaler Richtung quer zu der Transportrichtung 4.

Wie anhand der Fig. 3 ersichtlich ist, können die Außenfläche und Innenfläche 23 im Bereich der Seitenwand 20 abschnittsweise einen zumindest weitestgehend ellipsoidsegment-förmigen Längsverlauf aufweisen. Grundsätzlich sind hierbei unterschiedlichste Verhältnisse für Längserstreckungen 36 und Breitenerstreckungen 37 der wenigstens einen Behandlungskammer 5, 6, 7, 8, 9, 10 denkbar. Beispielweise können sich die Längserstreckung 36 und die Breitenerstreckung 37 zumindest annähend gleichen, sodass die Außenfläche und Innenfläche 23 im Bereich der Seitenwand 20 abschnittsweise einen zumindest annähernd kreissegmentförmigen Längsverlauf aufweisen. Wie in der Fig. 3 dargestellt ist, kann die wenigstens eine Behandlungskammer 5, 6, 7, 8, 9, 10 aber auch eine größere Längserstreckung 36 als Breitenerstreckung 37 aufweisen. In diesem Fall würden sich die Stellen mit der größten Krümmung der Innenfläche 22 des Bodenabschnitts 19, der Innenfläche 24 des Übergangsabschnitts, sowie gegebenenfalls der Innenfläche 29 des oberen Abdeckungsabschnitts 27 und der Innenfläche 30 des weiteren Übergangsabschnitts 28, im Bereich der beiden Öffnungen 35 in der Seitenwand 20 befinden.

Im Bereich der beiden Öffnungen 35, welche die jeweiligen Endbereiche des Längsverlaufs der wenigstens einen Behandlungskammer 5, 6, 7, 8, 9, 10 bilden, kann die Seitenwand 20 bzw. deren Außenfläche und Innenfläche 23 sowohl in horizontaler, als auch in vertikaler Richtung betrachtet, einen zumindest im Wesentlichen ebenen Verlauf aufweisen, wie dies am besten durch Zusammenschau der Fig. 2 und Fig. 3 ersichtlich ist. Hierdurch kann insbesondere eine möglichst lückenlose Ankoppelung mehrerer Behandlungskammern 5, 6, 7, 8, 9, 10 aneinander ausgebildet sein, sodass im Betrieb der Pasteurisierungsvorrichtung 1 die Behältnisse 2 unmittelbar von einer Kammer 5, 6, 7, 8, 9, 10 in die nächste Kammer 5, 6, 7, 8, 9, 10 überführt werden können.

Wie durch Zusammenschau der Fig. 2 und der Fig. 3 ersichtlich ist, können der Bodenabschnitt 19 und der Übergangsabschnitt 21, der wenigstens einen Behandlungskammer 5, 6, 7, 8, 9, 10, respektive deren Außenflächen und Innenflächen 22, 24, einen einem Ellipsoid-Segment zumindest weitestgehend entsprechenden, geometrischen Verlauf zeigen. Selbiges gilt auch für den geometrischen Verlauf der Außenflächen und Innenflächen 29, 30 des oberen Abdeckungsabschnitts 27 und des weiteren Übergangsabschnittes 28. Insgesamt kann der geometrische Verlauf der Außenflächen der wenigstens einen Behandlungskammer 5, 6, 7, 8, 9, 10 dem geometrischen Verlauf der Innenflächen 22, 23, 24, 29, 30 in allen Abschnitten zumindest weitestgehend gleich sein, wobei natürlich die Ausdehnung der Außenflächen größer ist, als die Ausdehnung der Innenflächen 22, 23, 24, 29, 30, wie dies auch anhand der Darstellungen in der Fig. 2 und Fig. 3 veranschaulicht ist. Geringfügige, abschnittsweise Abweichungen zwischen dem geometrischen Verlauf der Außenflächen und dem geometrischen Verlauf der Innenflächen 22, 23, 24, 29, 30 in Teilabschnitten, resultieren hierbei natürlich in geringfügigen Unterschieden der Wandstärken der zumindest einen Behandlungskammer 5, 6, 7, 8, 9, 10 in Teilabschnitten.

Wie sowohl in der Fig. 2 als auch der Fig. 3 veranschaulicht ist, kann vorgesehen sein, dass die Öffnungen 35 der wenigstens einen Behandlungskammer 5, 6, 7, 8, 9, 10 einen in die Seitenwand mündenden Übergang 44 aufweisen, wobei eine Innenfläche 45 dieses Übergangs 44, bezogen auf den Innenraum 26 der wenigstens einen Behandlungskammer 5, 6, 7, 8, 9, 10, vollumfänglich gekrümmt, aber an jeder Stelle glatt ausgestaltet ist.

Wie anhand des in der Fig. 2 dargestellten Ausführungsbeispiels veranschaulicht ist, kann der Ablauf 25 der wenigstens einen Behandlungskammer 5, 6, 7, 8, 9, 10 einen in den Bodenabschnitt 19 mündenden Übergang 38 aufweisen. Hierbei kann eine Innenfläche 39 dieses Übergangs 38, bezogen auf den Innenraum 26 der wenigstens einen Behandlungskammer 5, 6, 7, 8, 9, 10, vollumfänglich gekrümmt, aber an jeder Stelle glatt ausgestaltet sein. Auch hierdurch ist eine nochmalige Verbesserung der Reinigungseffizienz für eine Kammer 5, 6, 7, 8, 9, 10 erzielbar.

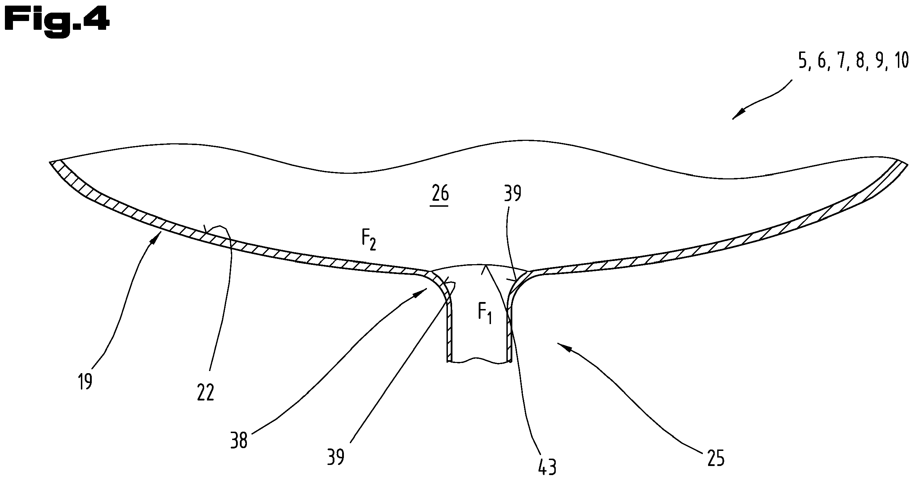

In der Fig. 4 ist ein Beispiel für einen Bereich einer Randkurve 43 zwischen Teilabschnitten von aneinandergrenzenden Innenflächen 22, 39, welcher berggrat-artig zum Innenraum 26 hin vorspringt dargestellt. Bei dem dargestellten Ausführungsbeispiel ist springt der Übergang im Bereich der Randkurve 43 zwischen einem Teilabschnitt der Innenfläche 22 des Bodenabschnitts 19 und dem angrenzenden Teilabschnitt der Innenfläche 39 des in den Bodenabschnitt 19 mündenden Übergangs 38 des Ablaufs 25 berggrat-artig zum Innenraum 26 der wenigstens einen Behandlungskammer 5, 6, 7, 8, 9, 10 vollumfänglich vor, und ist nicht glatt ausgestaltet. Solche berggrat-artigen Übergänge zwischen aneinandergrenzenden Teilabschnitten der Innenflächen 22, 23, 24, 29, 30, 39 oder zwischen Teilabschnitten von aneinandergrenzenden Innenflächen 22, 23, 24, 29, 30, 39, sind hinsichtlich der Neigung zur Bildung von Ablagerungen bzw. hinsichtlich der Reinigungseffizienz zumindest annähernd ähnlich unproblematisch zu betrachten, wie glatte Teilabschnitte der Innenflächen 22, 23, 24, 29, 30, 39.

Wie aus der Fig. 2 ersichtlich ist, kann die wenigstens eine Behandlungskammer 5, 6, 7, 8, 9, 10 im oberen Abdeckungsabschnitt 27 zumindest eine runde oder ovale Öffnung 40 für ein Zuführmittel 41 der Zufuhrvorrichtung 12 aufweisen. Eine Innenseite des Umrandungssegments 42 kann dabei glatt sein.

Grundsätzlich können auch noch zusätzliche Öffnungen in den Abschnitten 19, 20, 21, 27, 28 vorgesehen sein, wobei auch hierbei gilt, dass die Innenflächen 22, 23, 24, 29, 30 eines jeweiligen Abschnittes 19, 20, 21, 27, 28 im Bereich solcher zusätzlichen Öffnungen glatt ausgestaltet sind. Solche zusätzlichen Öffnungen können beispielsweise zum Einführen oder Anflanschen von Sensoren oder etwa für Waschvorrichtungen für den Innenraum 26 der wenigstens einen Behandlungskammer 5, 6, 7, 8, 9, 10 vorgesehen sein.

Schließlich kann auch noch vorgesehen sein, dass der wenigstens einen Behandlungskammer 5, 6, 7, 8, 9, 10 eine Waschvorrichtungen zur zumindest teilautomatisierten Reinigung der jeweiligen Innenflächen 22, 23, 24, 29, 30, 39 zugeordnet ist. Eine Waschvorrichtung kann beispielsweise durch eine oder mehrere, über zusätzliche Öffnung(en) in den Innenraum 26 der wenigstens einen Behandlungskammer 5, 6, 7, 8, 9, 10 eingebrachte Sprühvorrichtung(en), und eine mit der oder den Sprühvorrichtung(en) verbundene Reinigungsflüssigkeitsquelle umfassen.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Pasteurisierungsvorrichtung | 36 | Längserstreckung |
| 2 | Behältnis | 37 | Breitenerstreckung |
| 3 | Fördermittel | 38 | Übergang |
| 4 | Transportrichtung | 39 | Innenfläche |
| 5 | Anwärmkammer | 40 | Öffnung |
| 6 | Anwärmkammer | 41 | Zuführmittel |
| 7 | Pasteurisierungskammer | 42 | Umrandungssegment |
| 8 | Pasteurisierungskammer | 43 | Randkurve |
| 9 | Abkühlkammer | 44 | Übergang |
| 10 | Abkühlkammer | 45 | Innenfläche |
| 11 | Prozessflüssigkeit | | |
| 12 | Zufuhrvorrichtung | | |
| 13 | Umwälzpumpe | | |
| 14 | Sammelbereich | | |
| 15 | Sammelbecken | | |
| 16 | Sammelbecken | | |
| 17 | Dosiervorrichtung | | |
| 18 | Vorlauf | | |
| 19 | Bodenabschnitt | | |
| 20 | Seitenwand | | |
| 21 | Übergangsabschnitt | | |
| 22 | Innenfläche | | |
| 23 | Innenfläche | | |
| 24 | Innenfläche | | |
| 25 | Ablauf | | |
| 26 | Innenraum | | |
| 27 | Abdeckungsabschnitt | | |
| 28 | Übergangsabschnitt | | |
| 29 | Innenfläche | | |
| 30 | Innenfläche | | |
| 31 | Krümmungsradius | | |
| 32 | Krümmungsradius | | |
| 33 | Krümmungsradius | | |
| 34 | Krümmungsradius | | |
| 35 | Öffnung | | |

## Patentansprüche

1. Pasteurisierungsvorrichtung (1), umfassend
wenigstens eine Behandlungskammer (5, 6, 7, 8, 9, 10) zur Behandlung von in verschlossenen Behältnissen (2) abgefüllten Lebensmitteln mit einer temperierten Prozessflüssigkeit (11), welche wenigstens eine Behandlungskammer mindestens eine Zufuhrvorrichtung zur Zuführung temperierter Prozessflüssigkeit und wenigstens einen Ablauf zum Abführen der Prozessflüssigkeit aufweist,
wobei die wenigstens eine Behandlungskammer (5, 6, 7, 8, 9, 10) zumindest einen Bodenabschnitt (19), eine Seitenwand (20) und einen Übergangsabschnitt (21) zwischen dem Bodenabschnitt (19) und der Seitenwand (20) aufweist, und wobei der Bodenabschnitt (19), die Seitenwand (20) und der Übergangsabschnitt (21) jeweils eine zu einem Innenraum (26) der Behandlungskammer (5, 6, 7, 8, 9, 10) weisende Innenfläche (22, 23, 24) aufweisen,
und wobei in der Seitenwand (20) zumindest zwei Öffnungen (35) zur Zuführung und Abführung der Behältnisse (2) ausgestaltet sind,
**dadurch gekennzeichnet, dass**
alle Teilabschnitte der Innenfläche (22) des Bodenabschnitts (19), alle Teilabschnitte der Innenfläche (24) des Übergangsabschnittes (21) und alle Teilabschnitte der Innenfläche (23) der Seitenwand (20) glatt ausgestaltet sind,
wobei Bereiche von Randkurven zwischen aneinandergrenzenden Teilabschnitten der Innenflächen (22, 23, 24) und zwischen Teilabschnitten von aneinandergrenzenden Innenflächen (22, 23, 24) berggrat-artig zum Innenraum (26) hin vorspringend sind,
oder dass
alle Teilabschnitte der Innenfläche (22) des Bodenabschnitts (19), alle Teilabschnitte der Innenfläche (24) des Übergangsabschnittes (21) und alle Teilabschnitte der Innenfläche (23) der Seitenwand (20) glatt ausgestaltet sind, wobei alle Übergänge zwischen Teilabschnitten der Innenflächen (22, 23, 24) und alle Übergänge zwischen Teilabschnitten von aneinandergrenzenden Innenflächen (22, 23, 24) glatt ausgestaltet sind.

2. Pasteurisierungsvorrichtung nach Anspruch 1, **dadurch gekennzeichnet, dass** die wenigstens eine Behandlungskammer (5, 6, 7, 8, 9, 10) einen oberen Abdeckungsabschnitt (27) und einen weiteren Übergangsabschnitt (28) zwischen dem oberen Abdeckungsabschnitt (27) und der Seitenwand (20) aufweist, und dass alle Teilabschnitte einer Innenfläche (29) des oberen Abdeckungsabschnitts (27) und alle Teilabschnitte einer Innenfläche (30) des weiteren Übergangsabschnittes (28) glatt ausgestaltet sind, und wobei Bereiche von Randkurven zwischen aneinandergrenzenden Teilabschnitten der Innenflächen (23, 29, 30) und zwischen Teilabschnitten von aneinandergrenzenden Innenflächen (23, 29, 30) berggrat-artig zum Innenraum (26) hin vorspringend sind,
oder dass
alle Teilabschnitte der Innenfläche (29) des oberen Abdeckungsabschnitts (27) und alle Teilabschnitte der Innenfläche (30) des weiteren Übergangsabschnittes (28) glatt ausgestaltet sind, wobei alle Übergänge zwischen Teilabschnitten der Innenflächen (23, 29, 30) und alle Übergänge zwischen Teilabschnitten von aneinandergrenzenden Innenflächen (23, 29, 30) glatt ausgestaltet sind.

3. Pasteurisierungsvorrichtung nach Anspruch 1 oder 2, **dadurch gekennzeichnet, dass** alle Punkte auf der Innenfläche (22) des Bodenabschnitts (19) einen Krümmungsradius (31) von mindestens 100 mm aufweisen.

4. Pasteurisierungsvorrichtung nach einem der vorhergehenden Ansprüche, **dadurch gekennzeichnet, dass** alle Punkte auf der Innenfläche (24) des Übergangsabschnittes (21) einen Krümmungsradius (32) von mindestens 50 mm aufweisen.

5. Pasteurisierungsvorrichtung nach einem der Ansprüche 2 bis 4, **dadurch gekennzeichnet, dass** alle Punkte auf der Innenfläche (29) des oberen Abdeckungsabschnitts (27) einen Krümmungsradius (33) von mindestens 100 mm aufweisen.

6. Pasteurisierungsvorrichtung nach einem der Ansprüche 2 bis 5, **dadurch gekennzeichnet, dass** alle Punkte auf der Innenfläche (30) des weiteren Übergangsabschnittes (28) einen Krümmungsradius (34) von mindestens 50 mm aufweisen.

7. Pasteurisierungsvorrichtung nach einem der vorhergehenden Ansprüche, **dadurch gekennzeichnet, dass** der Ablauf (25) der wenigstens einen Behandlungskammer (5, 6, 7, 8, 9, 10) einen in den Bodenabschnitt (19) mündenden Übergang (38) aufweist, wobei eine Innenfläche (39) dieses Übergangs (38), bezogen auf den Innenraum (26) der wenigstens einen Behandlungskammer (5, 6, 7, 8, 9, 10), vollumfänglich gekrümmt, aber an jeder Stelle glatt ausgestaltet ist.

8. Pasteurisierungsvorrichtung nach einem der Ansprüche 2 bis 7, **dadurch gekennzeichnet, dass** die wenigstens eine Behandlungskammer (5, 6, 7, 8, 9, 10) im oberen Abdeckungsabschnitt (27) zumindest eine runde oder ovale Öffnung (40) für ein Zuführmittel der Zufuhrvorrichtung (12) aufweist, wobei eine Innenseite des Umrandungssegments (42) glatt ist.

9. Pasteurisierungsvorrichtung nach einem der vorhergehenden Ansprüche, **dadurch gekennzeichnet, dass** der wenigstens einen Behandlungskammer (5, 6, 7, 8, 9, 10) eine Waschvorrichtung zur zumindest teilautomatisierten Reinigung der jeweiligen Innenflächen (22, 23, 24, 29, 30) zugeordnet sind.
